**Europäisches Patentamt**

(19) **European Patent Office**

**Office européen des brevets**

(11) Veröffentlichungsnummer: **0 023 259**
**B1**

(12) **EUROPÄISCHE PATENTSCHRIFT**

(45) Veröffentlichungstag der Patentschrift:
**13.04.83**

(51) Int. Cl.³: **F 16 B 25/00**, F 16 B 33/02

(21) Anmeldenummer: **80103268.1**

(22) Anmeldetag: **12.06.80**

(54) **Gewindeschneidschraube.**

(30) Priorität: **07.07.79 DE 7919588 U**

(43) Veröffentlichungstag der Anmeldung:
**04.02.81 Patentblatt 81/5**

(45) Bekanntmachung des Hinweises auf die Patenterteilung:
**13.04.83 Patentblatt 83/15**

(84) Benannte Vertragsstaaten:
**AT BE CH DE FR GB IT LI NL SE**

(56) Entgegenhaltungen:
**DE-A-2 543 042**
**FR-A-796 504**
**FR-A-1 140 237**
**FR-A-2 384 153**
**US-A-3 824 888**

(73) Patentinhaber: **Kerb-Konus-Vertriebs-GmbH, Dr. Carl-Eibes-Strasse, D-8454 Schnaittenbach (DE)**

(72) Erfinder: **Eibes, Christian, Dr. Carl-Eibes-Strasse, D-8454 Schnaittenbach (DE)**
Erfinder: **Tildesley, James M.G., Stratford House, Hilton Nr. Bridgnorth Shropshire (GB)**

(74) Vertreter: **Charrier, Rolf, Dipl.-Ing., Postfach 260 Rehlingenstrasse 8, D-8900 Augsburg 31 (DE)**

Gewindeschneidschraube

Die Erfindung betrifft eine Gewindeschneidschraube zum Einschrauben in eine gewindelose Bohrung.

Zur Formung des Muttergewindes in einer gewindelosen Bohrung wird in diese Bohrung ein Gewindedorn unter Druck eingeschraubt, welcher an seinem Einschraubende zugespitzt ist. Dieser Gewindedorn drückt oder schneidet das Muttergewinde in die Bohrung ein, so daß nachfolgend eine Schraube in diese Bohrung eingeschraubt werden kann. Der Gewindedorn kann auch mehrere längsverlaufende Nuten aufweisen, so daß seitliche Schneidkanten entstehen.

Es sind auch Gewindeschneidschrauben bekannt, wobei es sich um gehärtete Stahlschrauben handelt, welche mit einem Sondergewinde versehen sind. Das Einschraubende ist hierbei leicht konisch ausgebildet, wobei der Gewindeanfang als Schneidkante wirkt und das Muttergewinde erzeugt, wenn die Schraube in eine Bohrung eingeschraubt wird. Dabei kann die Schneidkante durch eine quer zur Schraubenachse angeordnete Bohrung gebildet werden (siehe FR-A-1 140 237 und US-A-3 824 888). Neben dem Vorteil, daß hierbei das Muttergewinde nicht geschnitten zu werden braucht, ist in diesem Fall noch eine kraftschlüssige Passung zwischen der Schraube und dem Muttergewinde vorhanden, die eine erhöhte Sicherheit gegen Lockern mit sich bringt.

Es besteht die Aufgabe, handelsübliche, genormte Gewindeschrauben so auszubilden, daß sie beim Einschrauben in eine gewindelose Bohrung das Muttergewinde schneiden.

Gelöst wird diese Aufgabe mit den Merkmalen des Anspruchs 1. Vorteilhafte Ausgestaltungen sind den Unteransprüchen entnehmbar. Durch am Einschraubende vorgesehene quer zur Schraubenachse verlaufende Bohrungen entstehen Schneidkanten, die beim Einschrauben der Schraube ein Muttergewinde in die Bohrung einschneiden.

Die Zeichnung zeigt zwei Ausführungsbeispiele.

Fig. 1 ist eine Seitenansicht einer Gewindeschneidschraube;

Fig. 2 ein Schnitt längs der Linie A-B und

Fig. 3 ein Teilschnitt bei einer weiteren Ausführungsform.

Die dargestellte Schraube ist im Bereich des Einschraubendes mit drei quer zur Schraubenachse 1 verlaufenden Bohrungen 2, 3, 4 versehen. Bei diesen Bohrungen handelt es sich bevozugt um Sackbohrungen. Die Bohrungen sind um etwa 120° versetzt zueinander angeordnet.

Die Bohrungen befinden sich im Bereich des Einschraubendes 5 der Schraube. Bevorzugt weist die Schraube eine Kuppe 6 oder Anschrägung auf, wobei der untere Rand der Bohrungen 2, 3, 4 einen geringfügigen Abstand zum Rand 7 der Kuppe 6 aufweist. Dieser Abstand entspricht bevorzugt der Höhe der Gewindesteigung.

Das Gewinde kann am Einschraubende angefast sein. Die Fase ist in der Zeichnung mit 8 bezeichnet. Diese Fase verläuft am unteren Rand 7 des Einschraubendes bis auf den Gewindegrund und erstreckt sich nach oben bis maximal zum oberen Rand 9 der Bohrungen 2, 3, 4.

Wird diese Gewindeschneidschraube in eine gewindelose Bohrung eingeschraubt, dann wirken die, in Einschraubrichtung gesehen, hinteren Ränder der Bohrungen 2, 3, 4 als Schneidkanten, welche das Muttergewinde in der Bohrung schneiden. Die Späne können sich hierbei im Inneren der Bohrungen sammeln. Das Muttergewinde wird hierbei nicht voll ausgeschnitten, wie dies bei Verwendung eines Gewindeschneiddorns der Fall wäre, mit dem Ergebnis, daß ein fester Sitz der Gewindeschneidschraube in der Bohrung erhalten wird.

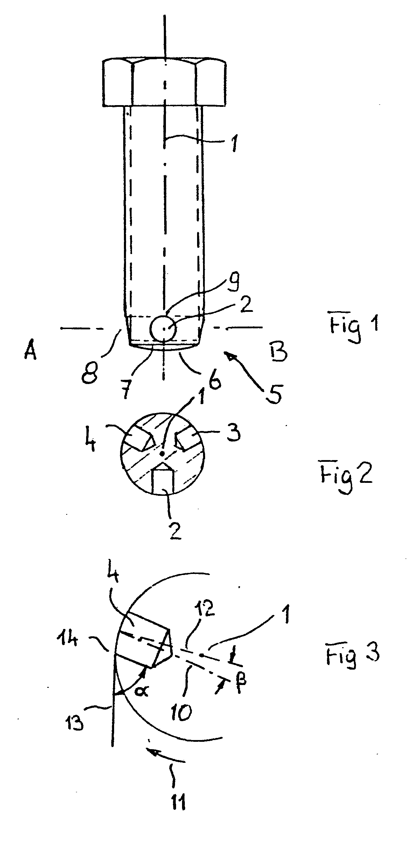

Im gezeigten Ausführungsbeispiel verlaufen die Achsen der Bohrungen 2, 3, 4 in Richtung auf die Schraubenachse 1. Es ist jedoch auch möglich, die Bohrungsachsen schräg verlaufen zu lassen, wie dies im vergrößerten Maßstab die Fig. 3 zeigt.

Die Bohrung 4 ist hierbei ebenfalls quer verlaufend zur Schraubenachse 1 angeordnet, jedoch schneidet die Bohrungsachse 10 die Schraubenachse 1 nicht. Vielmehr ist die Bohrungsachse 10 um den Winkel $\beta$ zur Radialen 12 schräg angeordnet, so daß in Einschraubrichtung 11 gesehen die hintere Kante 14 der Bohrung 4 einen Winkel $\alpha$ zur dortigen Tangentialen 13 bildet, der kleiner als 90° ist.

Die Kante 14 bildet somit eine ausgeprägte Schneidkante mit einem Schneidwinkel $\alpha$ von weniger als 90°.

Diese Ausführungsform wird bevorzugt dann gewählt, wenn die Bohrung 4 im Bereich einer Fase 8 angeordnet ist. Die anderen Bohrungen 2 und 3 sind dann in gleicher Weise ausgebildet und angeordnet wie die Bohrung 4.

**Patentansprüche**

1. Gewindeschneidschraube zum Einschrauben in eine gewindelose Bohrung, die am Einschraubende mindestens eine quer zur Schraubenachse (1) verlaufende Bohrung aufweist, dadurch gekennzeichnet, daß drei um etwa 120° zueinander versetzte Bohrungen (2, 3, 4) vorgesehen sind.

2. Gewindeschneidschraube nach Anspruch 1, dadurch gekennzeichnet, daß bei Schrauben mit einer Kuppe (6) der untere Rand der Bohrungen (2, 3, 4) einen Abstand von etwa der Gewindesteigung zum Rand (7) der Kuppe (6) aufweist.

3. Gewindeschneidschraube nach Anspruch 1 oder 2, dadurch gekennzeichnet, daß bei einer Schraube mit einer Fase (8) diese am Einschraubende bis auf den Gewindegrund verläuft und sich nach oben bis maximal zum oberen Rand der Bohrungen (2, 3, 4) erstreckt.

4. Gewindeschneidschraube nach einem der Ansprüche 1 bis 3, dadurch gekennzeichnet, daß die Bohrungen (2, 3, 4) unter einem Winkel ($\beta$) schräg zur Radialen (12) verlaufen, wobei in Einschraubrichtung (11) gesehen die hintere Kante (14) der jeweiligen Bohrung (2, 3, 4) mit der dortigen Tangente einen Schneidwinkel ($\alpha$) < 90° bildet.

## Claims

1. A self-tapping screw to be screwed into an untapped bore, with at least one bore at the screwing-in end extending transversely to the axis (1) of the screw, characterised in that three bores (2, 3, 4) are provided, offset from each other by approximately 120°.

2. A self-tapping screw according to Claim 1, characterised in that if the screw has a dome (6) the lower edge of the bores (2, 3, 4) lies approximately the amount of the pitch of the threads away from the edge (7) of the dome (6).

3. A self-tapping screw according to Claim 1 or 2, characterised in that if the screw has a chamfer (8) at the screwing-in end this extends as far as the base of the thread and extends upwards no further than the upper edge of the bores (2, 3, 4).

4. A self-tapping screw according to one of Claims 1 to 3, characterised in that the bores (2, 3, 4) obliquely to the radius at an angle ($\beta$), and the rear edge (14), viewed in the screwing-in direction, of the relevant bores (2, 3, 4) forms a cutting angle ($\alpha$) < 90° with the tangent there.

## Revendications

1. Vis auto-taraudeuse prévue pour être vissée dans un alésage non fileté, et dont l'extrémité vissante présente ou moins un trou percé transversalement à l'axe (1) de la vis; celle-ci étant caractérisée en ce qu'elle comporte trois trous (2, 3, 4) transversaux à son axe, et décalée de 120° l'un par rapport à l'autre.

2. Vis auto-taraudeuse selon la revendication 1, dont l'extrémité vissante présente une partie terminale bombée (6); caractérisée en ce que le bord inférieur des trous transversaux (2, 3, 4) est écarté du bord (7) de la partie terminale bombée (6) d'une distance sensiblement égale au pas du filetage de la vis.

3. Vis auto-taraudeuse selon l'une des revendications 1 ou 2, dont l'extrémité vissante présente une partie (8) sensiblement tronconique de profil rétreint, caractérisée en ce que le profil de la partie rétreinte (8) va jusqu'au fond des filets de la vis, et en ce que cette partie rétreinte s'étend au maximum vers le haut jusqu'au niveau du bord supérieur des trous transversaux (2, 3, 4).

4. Vis auto-taraudeuse selon l'une des revendications 1 à 3, caractérisée en ce que les trous transversaux (2, 3, 4) présentent, par rapport à chacune des directions radiales correspondantes, un angle d'obliquité $\beta$, tel que la génératrice postérieure (14) de chaque trou transversal, dans le sens du vissage (11), forme un angle de coupe $\alpha$ < 90° avec la tangente correspondante (13).

Fig 1

Fig 2

Fig 3